# EUROPÄISCHE PATENTSCHRIFT

(11) **EP 1 853 449 B1**
(45) Veröffentlichungstag und Bekanntmachung des Hinweises auf die Patenterteilung: **10.04.2013**
(21) Anmeldenummer: 06705885.9
(22) Anmeldetag: 02.02.2006
(51) Int. Cl.: B60J 7/20, E05D 15/42

(54) **KRAFTFAHRZEUG MIT EINEM IN ZWEI SINNEN ÖFFNUNGSFÄHIGEN DECKELTEIL**
MOTOR VEHICLE WITH A ROOF SECTION WHICH MAY OPEN IN TWO DIRECTIONS
VEHICULE COMPRENANT UNE PARTIE DE RECOUVREMENT

(30) Priorität: 10.02.2005 DE 102005006272
(43) Veröffentlichungstag der Anmeldung: 14.11.2007
(73) Patentinhaber: Valmet Automotive Oy, 23500 Uusikaupunki (FI)
(72) Erfinder: MEINERT, Stefan, 49134 Wallenhorst (DE)
(74) Vertreter: Kronthaler, Schmidt & Coll.
(86) Internationale Anmeldenummer: PCT/DE2006/000156
(87) Internationale Veröffentlichungsnummer: WO 2006/084434

(56) Entgegenhaltungen:
- DE-B3- 10 324 757
- DE-C1- 4 445 944
- FR-A- 2 846 604
- US-A1- 2002 140 250
- US-B1- 6 193 300

## Beschreibung

Die Erfindung betrifft ein Kraftfahrzeug mit einem unterhalb eines Deckelteils ablegbaren Dach oder Dachteil, insbesondere ein Cabriolet-Fahrzeug, wobei das Deckelteil in zwei unterschiedlichen Bewegungsabläufen öffnungsfähig ist, nach dem Oberbegriff des Anspruchs 1.

Aus der DE 44 45 944 C1 ist ein Cabriolet-Fahrzeug bekannt, das ein in zwei gegensinnigen Bewegungsabläufen zu öffnendes Deckelteil vorsieht, um je nach Öffnungssinn einerseits eine Durchtrittsöffnung für das Dach und andererseits eine Beladeöffnung für Gepäck freizugeben. Das Deckelteil ist an einem heckwärtigen Hilfsrahmen gehalten, der seinerseits zur Verwirklichung eines ersten Bewegungssinns um eine hecknahe Achse schwenkt und zur Verwirklichung eines zweiten Bewegungssinns unverschwenkt verharrt, während dann an dem Hilfsrahmen gehaltene Mehrgelenke öffnen. Eine derartige Konstruktion erfordert einen hohen konstruktiven Aufwand mit einer Vielzahl von Drehpunkten. Zudem schwenkt das Deckelteil bei Freigabe der Durchtrittsöffnung für das Dach um eine seinem rückwärtigen Schloss zugeordnete Achse, was die Gestaltungsmöglichkeiten des Fahrzeughecks einschränkt.

Der Erfindung liegt das Problem zugrunde, ein Kraftfahrzeug der genannten Art hinsichtlich der Öffnungsmechanik seines Deckelteils zu verbessern.

Die Erfindung löst dieses Problem durch ein Kraftfahrzeug mit den Merkmalen des Anspruchs 1 oder durch ein Kraftfahrzeug mit den Merkmalen des Anspruchs 2, die einzeln oder in Kombination mit denen des Anspruchs 1 verwirklicht sein können. Hinsichtlich vorteilhafter Ausgestaltungen der Erfindung wird auf die weiteren Ansprüche 3 bis 10 verwiesen.

Mit der Erfindung ist in Ausbildung nach Anspruch 1 eine besondere Einfachheit dadurch erreicht, dass das Getriebe nur einen Freiheitsgrad für beide Öffnungssinne des Deckelteils aufweist. Mit demselben Getriebe können somit beide gegensinnige Öffnungsbewegungen des Deckelteils bewirkt werden. Es bedarf keiner getrennten Gelenkanordnungen für die Bewegung zur Freigabe der Durchtrittsöffnung für das Dach einerseits und die Bewegung zur Freigabe der Beladeöffnung für Gepäck andererseits. Die Gesamtkonstruktion ist damit erheblich vereinfacht, ebenso sind der Raumbedarf im Fahrzeug und die Anzahl der Drehpunkte wie auch der Steuerungsaufwand minimiert. Weder ist ein Hilfsrahmen noch eine sonstige Blockierung eines Teils der für einen der Bewegungssinne erforderlichen Gelenke nötig, um die Zahl der Getriebefreiheitsgrade herabzusetzen.

Sofern ein zentraler Antriebslenker der Bewegung aus der geschlossenen Stellung heraus in zwei Richtungen ausschwenkbar ist, kann ein einziger Antrieb, zum Beispiel eine elektrisch bewegbare Spindel, ohne Umschaltung für beide Öffnungssinne verwendet werden. Die Steuerung der Bewegung ist dadurch sehr einfach. Die nur eine Rotationsmöglichkeit in zwei Richtungen vereinfacht die Gesamtkonstruktion.

Wenn der Antriebslenker um eine quer zum Fahrzeug gelegene Drehachse rotierbar ist, kann der Antrieb zum Beispiel vertikal hinter dem hinteren Radhaus Platz sparend und unter Ausnutzung ohnehin vorhandener Karosserieräume angeordnet werden.

Eine Ausbildung eines zentralen Dreieckslenkers, der auf der Drehachse drehbar gehalten und der hierzu beabstandet zwei Gelenke für zwei Antriebslenker der Deckelteilbewegung trägt, kann bei Auslenkung aus der Nulllage gleichzeitig eine Schubkraft auf beide Antriebslenker ausüben und erreicht eine schnelle und effektive Bewegung des Deckelteils in der einen oder anderen Richtung.

Zudem ist es besonders vorteilhaft möglich, dass bei Deckelteilöffnung schwenkende Antriebslenker in der Nullstellung die Drehachse zumindest nahezu schneiden und daher eine äußere Krafteinleitung auf diese Antriebslenker, etwa durch einen gewaltsamen Öffnungsversuch des Deckelteils, kein Drehmoment um die Drehachse ausübt und dadurch die geschlossene Stellung eine zusätzliche Sicherung erfährt. Die Zahl der Schlösser kann dadurch minimiert werden.

Sofern das Getriebe bei Öffnung des Deckelteils zur Freigabe der Durchtrittsöffnung für das Dach in eine Extremalwinkelstellung und bei Freigabe der Beladeöffnung für Gepäck in einer anderen Extremalwinkelstellung ausgelenkt ist, können die Öffnungswinkel durch einstellbare Anschläge begrenzt und somit justierbar sein. Ein Antrieb muss dann zwischen beiden unterschiedlichen Öffnungsstellungen nur in einer Richtung verfahren, wobei die Nullstellung mit geschlossenem Deckelteil eine einfache Zwischenstellung des Antriebs darstellen kann.

Eine Anbindung des Deckelteils in jedwedem Bewegungssinn nur über das oder die Getriebe an die Karosserie macht weitere Halteteile, wie etwa Hilfsrahmen oder dergleichen, vollständig entbehrlich.

Ein besonderer Vorteil lässt sich erreichen, wenn bei Freigabe der Durchtrittsöffnung für das Dach das Deckelteil insgesamt derart anhebbar ist, dass sein hinteres Ende seine Höhe bei geschlossenem Deckelteil nicht unterschreitet. Damit kann eine bei einer geschlossenen Version des Fahrzeugtyps verwendete Heckgestaltung, insbesondere eine Stoßstange, unverändert übernommen werden, ohne dass dort eine Vertiefung für den sich absenkenden hinteren Teil des Deckelteils vorgesehen werden müsste. Dies spart erhebliche Umrüstkosten ein.

Die Gelenke des Getriebes können von verschiedener Art und etwa als Drehgelenke, Schubgelenke oder Kurvengelenke ausgebildet sein.

Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:
- Fig. 1: eine seitliche schematische Ansicht eines Heckbereichs eines erfindungsgemäßen Cabriolet-Fahrzeugs in geschlossener Stellung des Deckelteils,
- Fig. 2: eine ähnliche Ansicht nur des Deckelteils und der zugehörigen Bewegungsmechanik wie in Fig. 1 während der beginnenden Öffnung des Deckelteils zur Freigabe einer Beladeöffnung für Gepäck,
- Fig. 3: eine ähnliche Ansicht wie Fig. 2 bei weiter fortschreitender Öffnung des Deckelteils,
- Fig. 4: eine ähnliche Ansicht wie Fig. 3 bei vollständig geöffnetem Deckelteil zur Freigabe der Beladeöffnung für Gepäck,
- Fig. 5: eine ähnliche Ansicht des Heckbereichs wie in Fig. 2, jedoch bei dazu gegensinniger beginnender Öffnung des Deckelteils zur Freigabe der Durchtrittsöffnung für das Dach,
- Fig. 6: eine ähnliche Ansicht des Deckelteils und der zugehörigen Bewegungsmechanik wie in Fig. 5 bei weiter fortschreitender Öffnung des Deckelteils zur Freigabe der Durchtrittsöffnung für das Dach,
- Fig. 7: eine ähnliche Ansicht wie Fig. 6 bei weiter fortschreitender Öffnung des Deckelteils zur Freigabe der Durchtrittsöffnung für das Dach,,
- Fig. 8: eine ähnliche Darstellung des Deckelteils in vollständig zur Freigabe der Durchtrittsöffnung für das Dach geöffneter Stellung.

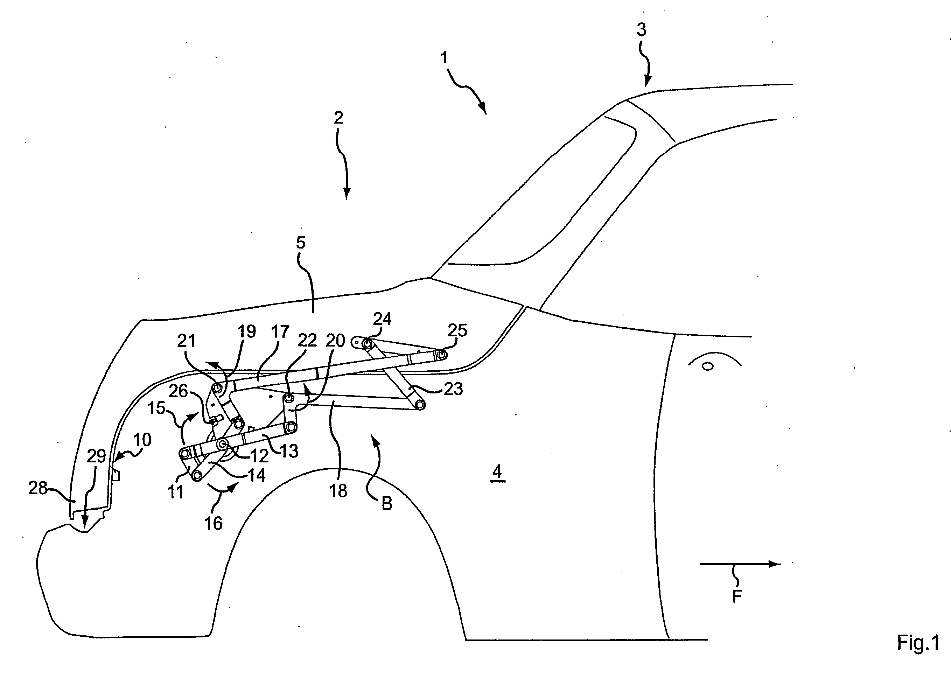

In Fig. 1 ist ein Heckbereich 2 eines insgesamt mit 1 bezeichneten Kraftfahrzeugs mit einem zumindest teilweise öffnungsfähigen Dach 3 gezeigt. Insbesondere kann es sich um ein Cabriolet-Fahrzeug mit einem vollständig öffnungsfähigen Dach 3 handeln. Dieses kann teilweise oder vollständig aus starren Teilen bestehen oder auch außerhalb einer Heckscheibe durchgehend mit einer flexiblen Bespannung versehen sein. Das Dach 3 ist zu seiner Öffnung in der Karosserie 4 unterhalb eines beweglichen Deckelteils 5 in einem Verdeckkasten - nicht gezeichnet - ablegbar.

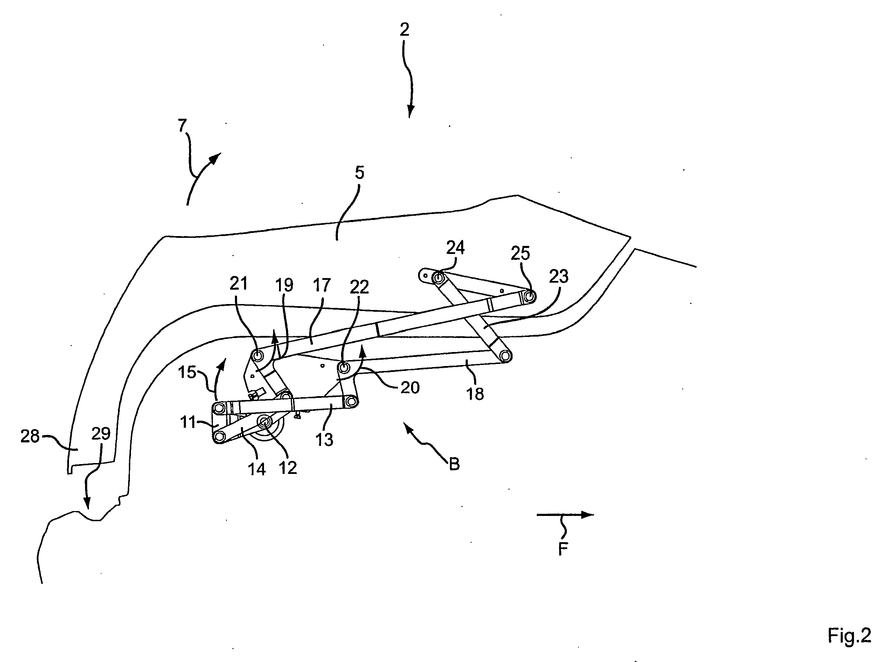

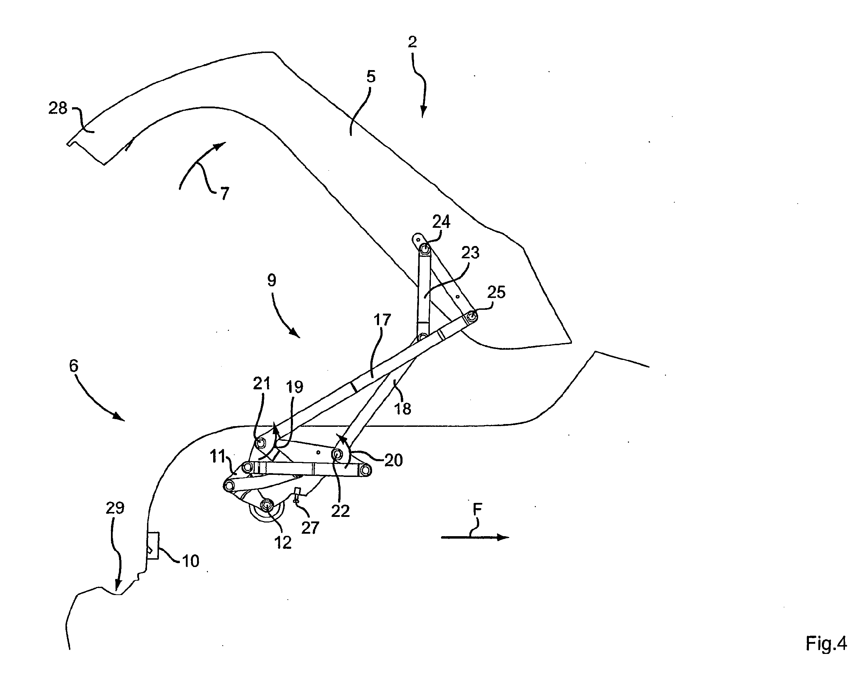

Das Deckelteil 5 kann aus seiner geschlossenen Stellung nach Fig. 1 in zwei gegensinnigen Bewegungen geöffnet werden:
Um eine Freigabe einer Beladeöffnung 6 für Gepäck zu ermöglichen, kann das Deckelteil 5 in einem in Richtung des Pfeils 7 öffnenden Bewegungssinn (Fig. 2, bis Fig. 4) aufgeschwenkt und zum Schließen gegen den Pfeil 7 zurückgeschwenkt werden.

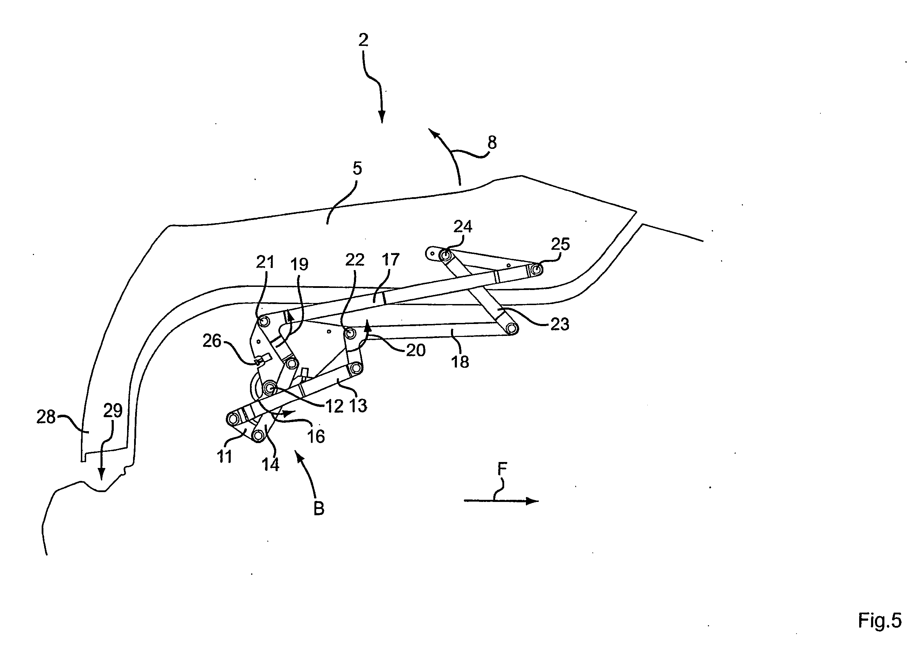

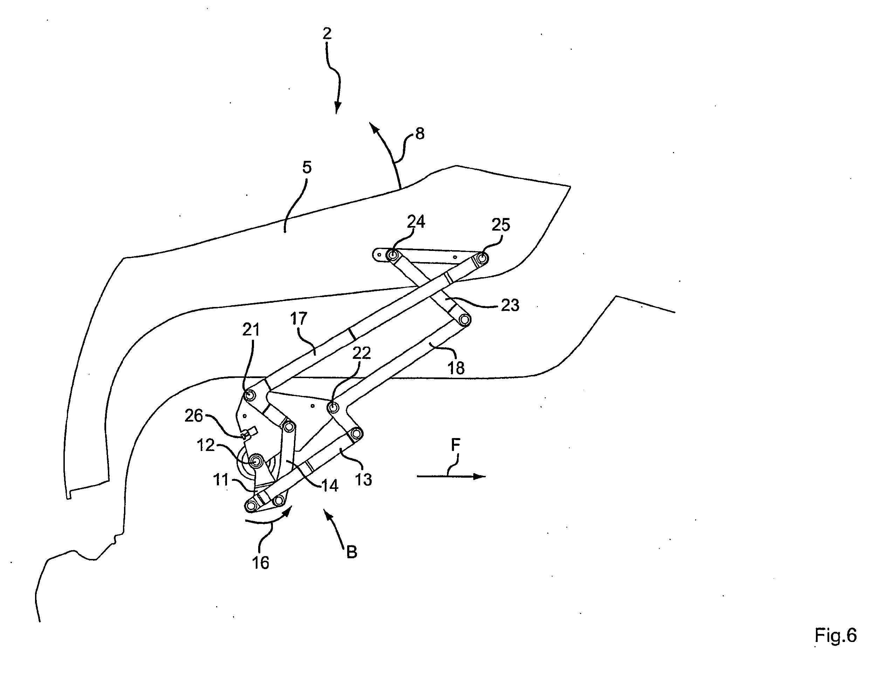

Des Weiteren kann das Deckelteil 5 in einem gegenläufigen Öffnungssinn zur Freigabe einer Durchtrittsöffnung 9 für das Dach 3 in Richtung des Pfeils 8 geöffnet (Fig. 5 bis Fig. 8) und gegen dessen Richtung geschlossen werden.

Zur Ermöglichung dieser beiden Öffnungs- und Schließbewegungen ist das Deckelteil 5 zumindest an einer Fahrzeuglängsseite, üblicherweise an beiden, jeweils an einer insgesamt mit B bezeichneten Bewegungsmechanik über ein Getriebe mit nur einem Getriebefreiheitsgrad an der Karosserie 4 beweglich gehalten. Die Bewegungsmechanik B kann im Montageprozess mit dem Deckelteil 5 modular in die Karosserie 4 eingesetzt werden.

Im geschlossenen Zustand ist das Deckelteil 5 zusätzlich an einem heckseitigen Schloss 10 gehalten, in das es beim Schließen selbständig einrasten kann und das für die Öffnung zum Beispiel elektrisch fernauslösbar ist.

Das Getriebe ist antreibbar über einen Hauptlenker 11, der hier als Dreieckslenker ausgebildet ist und auf einer quer zum Fahrzeug erstreckten Achse 12 mit nur einem Rotationsfreiheitsgrad beweglich gehalten ist. An dem Dreieckslenker 11 sind mit Abstand zur Achse 12 zwei Antriebslenker 13, 14 schwenkbeweglich angeordnet, die bei geschlossenem Deckelteil 5 die Drehachse 12 in einer Totpunktlage kreuzen, so dass eine Zugkraft auf einen dieser Antriebslenker 13, 14 durch einen Versuch, das Deckelteil 15 von außen zu öffnen, nicht zu einem resultierenden Drehmoment des Hauptlenkers 11 um die Achse 12 führen kann. Hierdurch ist eine besondere Sicherung des geschlossenen Zustands erreicht. Es ist daher kein weiteres Schloss zwingend, wobei üblicherweise schon zum Ausgleich von eventuellen Toleranzen und Elastizitäten im Material zumindest ein Heckdeckelschloss 10 vorgesehen sein kann.

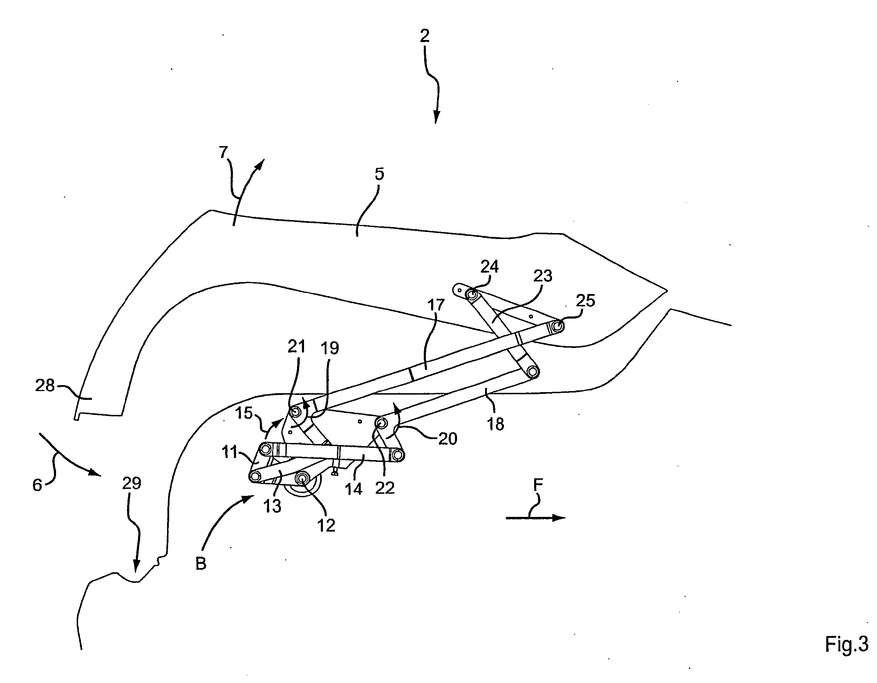

Um das Deckelteil 5 aus der geschlossenen Stellung (Fig. 1) im ersten Bewegungssinn in Richtung des Pfeils 7 zur Freigabe der Beladeöffnung 6 für Gepäck zu öffnen (Fig. 2 bis Fig. 4), wird der Dreieckslenker 11 über ein hier nicht dargestelltes Antriebsorgan, zum Beispiel einen Hydraulikzylinder, eine elektrisch angetriebene Spindel, einen Riemenantrieb oder ein anderes je nach räumlichen Verhältnissen gut in der Karosserie anzuordnendes Antriebsorgan in Richtung des Pfeils 15 um die Achse 12 verschwenkt, so dass die Antriebslenker 13 und 14 aus der Totpunktstellung herausbewegt werden und eine Schubkraft auf die von diesen beaufschlagten Aufstellhebel 17, 18 ausgeübt wird, so dass diese in Richtung der Pfeile 19, 20 mit unterschiedlichen Übersetzungen um ihre karosseriefesten Gelenke 21, 22 aufgestellt werden. Der vordere Aufstellhebel 18 durchläuft dabei einen größeren Winkelbereich. Dadurch wird, da dieser über einen umlenkenden Zwischenhebel 23 an der Anlenkung 24, und somit weiter hinten als der Aufstellhebel 17 mit seiner Anlenkung 25, am Deckelteil 5 angreift, dessen hinteres Ende stärker angehoben als sein vorderes (Fig. 4).

Am Ende der Drehbewegung in Richtung des Pfeils 15 ist eine Extremalwinkelstellung erreicht, an der der Dreieckslenker 11 an einem hier einstellbaren und somit den Öffnungswinkel des Deckelteils 5 begrenzenden Anschlag 26 anliegt (Fig. 4).

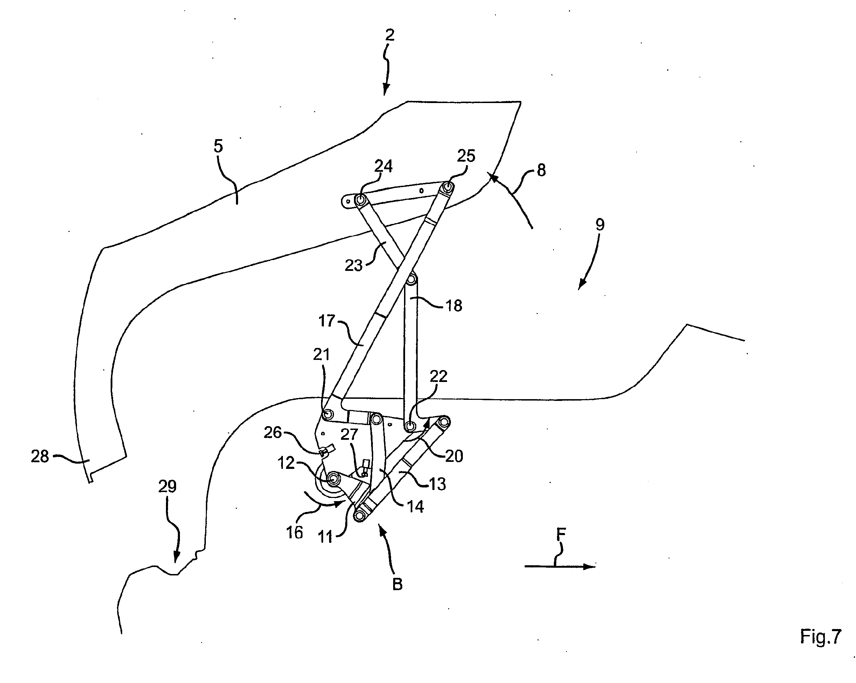

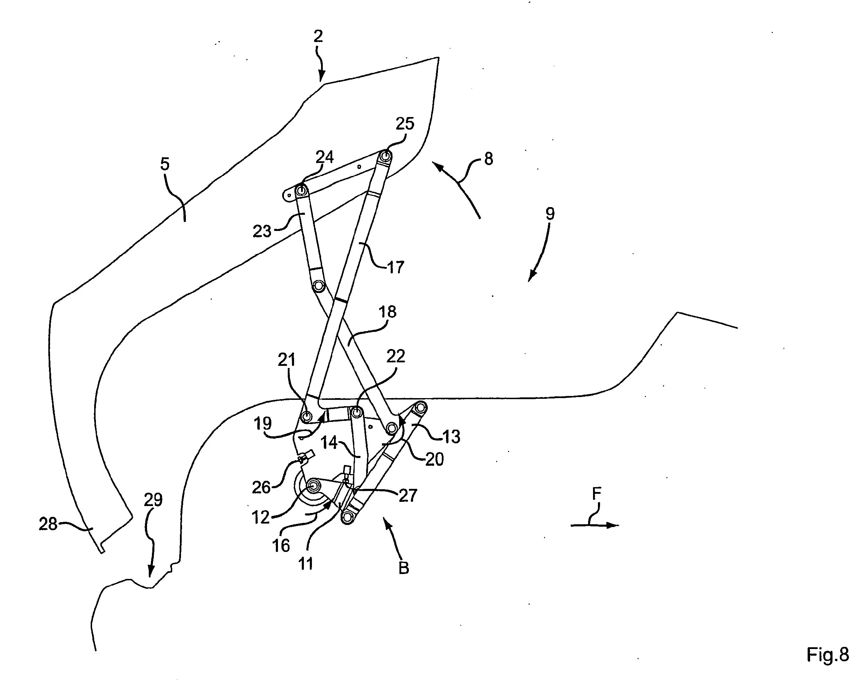

Um das Deckelteil 5 hingegen aus der Nullstellung mit geschlossenem Deckelteil 5 (Fig. 1) im zweiten Bewegungssinn in Richtung des Pfeils 8 zur Freigabe der Durchtrittsöffnung 9 für das Dach 3 zu öffnen (Fig. 5 bis Fig. 8)zu öffnen, wird der Dreieckslenker 11 aus seiner Nullstellung bei geschlossenem Deckelteil (Fig. 1) gegensinnig zur oben beschriebenen ersten Deckelteilöffnung in Richtung des Pfeils 16 gedreht, wobei die Antriebslenker 13 und 14 mitgenommen werden. Dadurch werden die von den Antriebslenkern 13, 14 beaufschlagten Aufstellhebel 17, 18 zwar wiederum in Richtung der Pfeile 19, 20 aufgestellt. Dieses mal wirken sich aufgrund der geänderten Drehrichtung des Dreieckslenkers 11 die unterschiedlichen Übersetzungen jedoch dahingehend aus, dass das Deckelteil 5 zunächst nahezu parallel angehoben und am Ende seiner Bewegung (Übergang von Fig. 7 zu Fig. 8) der Zwischenhebel 23 gegenüber dem Aufstellhebel 18 einknickt und somit das hintere Ende des Deckelteils abwärts verlagert wird.

Am Ende der Drehbewegung in Richtung des Pfeils 16 ist eine zur obigen Bewegung entgegengesetzte Extremalwinkelstellung erreicht, an der der Dreieckslenker 11 an einem hier ebenfalls einstellbaren und somit den Öffnungswinkel des Deckelteils 5 begrenzenden Anschlag 27 anliegt (Fig. 8).

Insgesamt umfasst das Getriebe hier beispielhaft zehn Gelenke, wobei nur die beiden Gelenke 21, 22 sowie das zentrale Drehgelenk 12 karosseriefest und die Gelenke 24, 25 fest am Deckelteil 5 angeordnet sind. Alle Gelenke sind während der Deckelteilbewegung mit in Bewegung, kein Gelenk wird blockiert, zum Beispiel durch Festhalten in einem Schloss.

Ein besonderer Vorteil besteht noch darin, dass durch das zunächst nahezu parallele Anheben des Deckelteils 5 auch in nach hinten gekippter Freigabestellung der Durchtrittsöffnung 9 für das Dach 3 das hintere Ende 28 des Deckelteils 5 seine Höhe bei geschlossenem Deckelteil nicht unterschreitet, so dass die hier gezeichnete Einkerbung 29 in die Stoßstange nicht erforderlich ist. Die Stoßstange oder sonstiges Karosserieteil kann vielmehr in der gleichen Weise wie bei einem Fahrzeug mit geschlossenem Aufbau ausgebildet sein, was erhebliche Kosten einspart.

Das Deckelteil 5 ist in jedweder Bewegungsphase nur über das oder die Getriebe an der Karosserie 4 gehalten, so dass weitere Gestängeteile entbehrlich sind und der Aufbau daher einfach und mit niedrigem Gewicht durchgeführt werden kann. Das Heckschloss 10 dient lediglich zur Verriegelung und hat keine tragende Funktion, insbesondere wird das Deckelteil 5 nicht um dieses gedreht.

Die erfindungsgemäße.Ausgestaltung ermöglicht zudem, dass das Deckelteil 5 während seines Schließens mit hoher Kraft in eine abwärts druckbelastete Anpressstellung verlagerbar ist. Dadurch ist eine gute Dichteigenschaft einer unterhalb des Deckelteils 5 verlaufenden Dichtung erreicht.

Insgesamt weist das von der Bewegungsmechanik 9 umfasste Getriebe nur eine mechanisch bestimmte Möglichkeit des Bewegungsablaufs aller Gelenke auf, so dass das Getriebe für jede Öffnungs- oder Schließbewegung des Deckelteils 5 nur einen Freiheitsgrad hat.

## Patentansprüche

1. Kraftfahrzeug (1) mit einem in einem rückwärtigen Fahrzeugbereich (2) unterhalb eines Deckelteils (5) ablegbaren Dach (3) oder Dachteil, wobei das Deckelteil (5) wahlweise zur Freigabe einer Beladeöffnung (6) für Gepäck oder zur Freigabe einer Durchtrittsöffnung (9) für das Dach (3) oder Dachteil geöffnet werden kann und hierfür über zumindest eine Bewegungsmechanik (B) im Fahrzeug (1) gehalten ist,
**dadurch gekennzeichnet,**
**dass** die Bewegungsmechanik (B) zumindest an einer Fahrzeugseite ein Getriebe mit nur einem Freiheitsgrad für beide Öffnungssinne des Deckelteils (5) umfasst.

2. Kraftfahrzeug (1) mit einem in einem rückwärtigen Fahrzeugbereich (2) unterhalb eines Deckelteils (5) ablegbaren Dach (3) oder Dachteil, wobei das Deckelteil (5) wahlweise zur Freigabe einer Beladeöffnung (6) für Gepäck oder zur Freigabe einer Durchtrittsöffnung (9) für das Dach (3) oder Dachteil geöffnet werden kann und hierfür über zumindest eine Bewegungsmechanik (B) im Fahrzeug (1) gehalten ist,
**dadurch gekennzeichnet,**
**dass** die Bewegungsmechanik (B) zumindest an einer Fahrzeugseite ein Getriebe umfasst, das einen aus einer geschlossenen Stellung des Deckelteils (5) heraus in zwei gegensinnigen Schwenkrichtungen beweglichen Hauptlenker (11) umfasst und je nach seiner Schwenkrichtung (15; 16) die Freigabe der Durchtrittsöffnung (9) für das Dach (3) oder die Freigabe der Beladeöffnung (6) für Gepäck bewirkt.

3. Kraftfahrzeug (1) nach einem der Ansprüche 1 oder 2,
**dadurch gekennzeichnet,**
**dass** das Getriebe eine Bewegung mit einer Rotation um eine quer zum Fahrzeug gelegene Drehachse (12) ermöglicht.

4. Kraftfahrzeug (1) nach einem der Ansprüche 1 bis 3,
**dadurch gekennzeichnet,**
**dass** das Getriebe einen Hauptlenker (11) aufweist, der auf der Drehachse (12) drehbar gehalten und der hierzu beabstandet zwei Gelenke für zwei Antriebslenker (13;14) der Deckelteilbewegung trägt.

5. Kraftfahrzeug (1) nach einem der Ansprüche 1 bis 4,
**dadurch gekennzeichnet,**
**dass** das Getriebe bei Öffnung des Deckelteils (5) zur Freigabe der Durchtrittsöffnung (9) für das Dach (3) in eine Extremalwinkelstellung und bei Freigabe der Beladeöffnung (6) für Gepäck in einer anderen Extremalwinkelstellung ausgelenkt ist.

6. Kraftfahrzeug (1) nach einem der Ansprüche 1 bis 5,
**dadurch gekennzeichnet,**
**dass** das Getriebe bei geschlossenem Deckelteil (5) in einer zwischen den Extremalwinkelstellungen gelegenen Nullstellung gehalten ist.

7. Kraftfahrzeug (1) nach Anspruch 6,
**dadurch gekennzeichnet,**
**dass** bei Deckelteilöffnung schwenkende Antriebslenker (13; 14) in der Nullstellung die Drehachse (12) zumindest nahezu schneiden.

8. Kraftfahrzeug (1) nach einem der Ansprüche 1 bis 7,
**dadurch gekennzeichnet,**
**dass** das Deckelteil (5) in jedweder Bewegungsphase nur über das oder die Getriebe an der Karosserie (4) gehalten ist.

9. Kraftfahrzeug nach einem der Ansprüche 1 bis 8,
**dadurch gekennzeichnet,**
**dass** bei Freigabe der Durchtrittsöffnung (9) für das Dach (3) das Deckelteil (5) insgesamt derart anhebbar ist, dass sein hinteres Ende (28) seine Höhe bei geschlossenem Deckelteil (5) nicht unterschreitet.

10. Kraftfahrzeug (1) nach einem der Ansprüche 1 bis 9,
**dadurch gekennzeichnet,**
**dass** das Deckelteil (5) in geschlossener Stellung nur über ein heckseitiges Schloss (10) verriegelt ist.

## Claims

1. A motor vehicle (1) comprising a roof (3) or roof part which can be stowed in a rear vehicle section (2), under a cover part (5), which cover part (5) can be selectively opened to expose a luggage loading opening (6) or to expose a passage opening (9) for the roof (3) or roof part and which is retained for this purpose by at least one displacement mechanism (B) in the vehicle (1),
**characterised in that**
said displacement mechanism (B) comprises, on at least one vehicle side, a transmission with only one degree of freedom for both opening directions of the cover part (5).

2. A motor vehicle (1) comprising a roof (3) or roof part which can be stowed in a rear vehicle section (2), under a cover part (5), which cover part (5) can be selectively opened to expose a luggage loading opening (6) or to expose a passage opening (9) for the roof (3) or roof part and which is retained for this purpose by at least one displacement mechanism (B) in the vehicle (1), **characterised in that** said displacement mechanism (B) comprises, on at least one vehicle side, a transmission comprising a main link (11) which can be moved out of a closed position of the cover part (5) in two opposite directions of pivot and which, depending on its direction of pivot (15;16), causes exposure of the passage opening (9) for the roof (3) or exposure of the luggage loading opening (6).

3. The motor vehicle (1) according to any one of claims 1 or 2, **characterised in that** the transmission enables a displacement including a rotation about a rotary axis (12) extending transversely with respect to the vehicle.

4. The motor vehicle (1) according to any one of claims 1 to 3, **characterised in that** the transmission comprises a main link (11) which is held in a rotary manner on the rotary axis (12) and carries two joints, spaced apart therefrom, for two drive links (13;14) for the displacement of the cover part.

5. The motor vehicle (1) according to any one of claims 1 to 4, **characterised in that** when opening the cover part (5), the transmission is moved to one extreme angular position to expose the passage opening (9) for the roof (3) and to another extreme angular position to expose the luggage loading opening (6).

6. The motor vehicle (1) according to any one of claims 1 to 5, **characterised in that** when the cover part (5) is closed, the transmission is held in a zero position between said extreme angular positions.

7. The motor vehicle (1) according to claim 6, **characterised in that** when opening the cover part, pivoting drive links (13;14) at least nearly intersect the rotary axis (12) in said zero position.

8. The motor vehicle (1) according to any one of claims 1 to 7, **characterised in that** the cover part (5) is retained on the vehicle body (4) only by the transmission(s) in each phase of displacement.

9. The motor vehicle according to any one of claims 1 to 8, **characterised in that**, when exposing the passage opening (9) for the roof (3), the cover part (5) can be lifted integrally such that its rear end (28) is not lower than its height when the cover part (5) is closed.

10. The motor vehicle (1) according to any one of claims 1 to 9, **characterised in that** the cover part (5) is locked in the closed position only via a rear lock (10).

## Revendications

1. Véhicule automobile (1) comprenant un toit (3) ou une partie de toit que l'on peut ranger à l'arrière (2) du véhicule, au-dessous d'un couvercle (5), ledit couvercle (5) pouvant être ouvert sélectivement ou bien pour libérer une ouverture de chargement de bagages (6) ou bien pour libérer une ouverture de passage (9) pour ledit toit (3) ou ladite partie de toit, ledit couvercle (5) étant tenu dans ce but par au moins un mécanisme de déplacement (B) dans ledit véhicule (1),
**caractérisé en ce que**
ledit mécanisme de déplacement (B) comprend, d'au moins un côté dudit véhicule, une transmission avec un seul degré de liberté pour les deux sens d'ouverture du couvercle (5).

2. Véhicule automobile (1) comprenant un toit (3) ou une partie de toit que l'on peut ranger à l'arrière (2) du véhicule, au-dessous d'un couvercle (5), ledit couvercle (5) pouvant être ouvert sélectivement ou bien pour libérer une ouverture de chargement de bagages (6) ou bien pour libérer une ouverture de passage (9) pour ledit toit (3) ou ladite partie de toit, ledit couvercle (5) étant tenu dans ce but par au moins un mécanisme de déplacement (B) dans ledit véhicule (1), **caractérisé en ce que** ledit mécanisme de déplacement (B) comprend, d'au moins un côté dudit véhicule, une transmission comprenant un bras principal (11) que l'on peut déplacer dans deux directions de pivotement opposées à partir d'une position fermée du couvercle (5) et qui, en fonction de sa direction de pivotement (15;16), a pour effet de libérer l'ouverture de passage (9) pour le toit (3) ou de libérer l'ouverture de chargement de bagages (6).

3. Véhicule automobile (1) selon l'une quelconque des revendications 1 ou 2, **caractérisé en ce que** la transmission permet un déplacement avec une rotation autour d'un axe de rotation (12) qui s'étend en direction transversale par rapport audit véhicule.

4. Véhicule automobile (1) selon l'une quelconque des revendications 1 à 3, **caractérisé en ce que** la transmission comprend un bras principal (11) qui est tenu de manière rotative sur l'axe de rotation (12) et qui porte, écarté de celui-ci, deux articulations pour deux bras d'entraînement (13;14) pour le déplacement du couvercle.

5. Véhicule automobile (1) selon l'une quelconque des revendications 1 à 4, **caractérisé en ce que**, lors de l'ouverture du couvercle (5), la transmission est déplacée vers une position angulaire extrême afin de libérer l'ouverture de passage (9) pour le toit (3) et vers une autre position angulaire extrême afin de libérer l'ouverture de chargement de bagages (6).

6. Véhicule automobile (1) selon l'une quelconque des revendications 1 à 5, **caractérisé en ce que**, lors de la fermeture du couvercle (5), la transmission est tenue dans une position de zéro entre lesdites positions angulaires extrêmes.

7. Véhicule automobile (1) selon la revendication claim 6, **caractérisé en ce que**, lors de l'ouverture du couvercle, des bras d'entraînement (13;14) pivotants sont au moins près de couper l'axe de rotation (12) dans ladite position de zéro.

8. Véhicule automobile (1) selon l'une quelconque des revendications 1 à 7, **caractérisé en ce que** le couvercle (5), à chaque phase de son déplacement, n'est tenu sur la carrosserie (4) que par la (les) transmission(s).

9. Véhicule automobile selon l'une quelconque des revendications 1 à 8, **caractérisé en ce que**, lors de la libération de l'ouverture de passage (9) pour le toit (3), on peut lever le couvercle (5) intégralement de manière que son extrémité arrière (28) ne soit pas située plus bas que son hauteur lorsque le couvercle (5) est fermé.

10. Véhicule automobile (1) selon l'une quelconque des revendications 1 à 9, **caractérisé en ce que** le couvercle (5) n'est verrouillé dans la position de fermeture que par une serrure arrière (10).
